**Europäisches Patentamt**

(19) **European Patent Office**

**Office européen des brevets**

(11) Publication number : **0 325 458 B1**

(12) # EUROPEAN PATENT SPECIFICATION

(45) Date of publication of patent specification :
**11.03.92 Bulletin 92/11**

(51) Int. Cl.⁵ : **G06K 7/06**

(21) Application number : **89300507.4**

(22) Date of filing : **19.01.89**

(54) **Card reader.**

(30) Priority : **19.01.88 GB 8801097**

(43) Date of publication of application :
**26.07.89 Bulletin 89/30**

(45) Publication of the grant of the patent :
**11.03.92 Bulletin 92/11**

(84) Designated Contracting States :
**AT BE CH DE ES FR GB GR IT LI LU NL SE**

(56) References cited :
**EP-A- 0 139 593**
**EP-A- 0 234 654**
**DE-A- 3 343 727**
**DE-A- 3 343 757**
**DE-A- 3 602 668**

(73) Proprietor : **TECHNOPHONE LIMITED**
**Ashwood House Pembroke Broadway**
**Camberley Surrey GU15 3SP (GB)**

(72) Inventor : **Charman, Neil John**
**1 Crake Place College Town**
**Camberley Surrey, GU15 4YA (GB)**
Inventor : **Harrup, Anthony Barry**
**31 Manor Crescent Byfleet**
**Weybridge Surrey, KT14 7EN (GB)**

(74) Representative : **Frain, Timothy John**
**Technophone Limited Intellectual Property**
**Manager Ashwood House Pembroke**
**Broadway**
**Camberley, Surrey GU15 3SP (GB)**

EP 0 325 458 B1

Jouve, 18, rue Saint-Denis, 75001 PARIS

## Description

This invention relates to a card reader for reading a card comprising information storage means and contact pads connected thereto which enable stored information to be read from the card.

The card may be, for example, a so-called "smart card" which is usually somewhat thicker than a conventional plastic credit card and which includes an integrated circuit in which information is stored. The integrated circuit is connected to contact pads on the card and these contact pads are engaged by contacts in the card reader to enable the information to be read.

DE-A-3,343,757 discloses a card reader having an externally opening drawer into which the card to be read is placed. Electrical contacts in the form of leaf springs are mounted on the drawer and are biassed towards the card. When the drawer is opened to remove or insert a card a movable roller rides up a guide surface and lifts the leaf springs out of contact with the card enabling the card to be removed without damaging the card or the contacts. Closing the drawer causes the leaf springs to be lowered gradually until they engage the contact pads on the card only when the drawer has been fully closed.

DE-A-3,343,727 similarly discloses a card reader with an externally opening drawer and with leaf spring contacts mounted on the drawer, although in this case the leaf springs are evidently biassed away from the card so that when the drawer is open the leaf springs are spaced apart from the card enabling it to be inserted or removed without damage. When the drawer is closed the leaf springs abut a protruding block fixed to the main chassis of the card reader, which urges the contacts into engagement with the contact pads on the card at the point when the drawer is substantially fully closed. When the drawer is opened the leaf spring contacts return to their natural position spaced apart from the card.

In both the above-cited documents the leaf spring contacts are mounted on the drawer itself and hence the leaf springs move relative to the main chassis. Because of this, these prior art card readers employ a flexible (extensible) connection to connect the leaf spring contacts to the circuitry in the chassis, although a separable, e.g. plug and socket type, arrangement could be envisaged as a possible alternative. Furthermore, a drawer assembly is inherently relatively cumbersome and necessarily contributes to the dimensional, particularly the height, requirements of the card reader as a whole.

Card readers which do not employ a drawer, but in which the card is inserted directly through a slot in the outer casing are known, for example, from EP-A-0,234,654; US-A-4-675,516 (corresponding to EP-A-0,139,593); and US-A-4,735,578 (corresponding to DE-A-3,602,668 and EP-A-0,230,674).

A card reader having the features recited in the precharacterising portion of claim 1 below is known from the aforementioned DE-A-3,343,727.

According to the present invention a card reader for reading a card comprising information storage means and contact pads connected thereto which enable stored information to be read from the card; the card reader including a chassis which supports a slidable carriage adapted to receive the card, a plurality of movable contacts for engaging the contact pads on the card, and means arranged to press against the movable contacts when the card is inserted into the card reader to urge the contacts into engagement with the contact pads on the card so that the information can be read from the card, is characterised in that the pressing means are present on the carriage and comprise at least one chamfered camming surface, and the movable contacts are supported by the chassis and have a respective portion confronting the camming surface(s) whereby the camming surfaces urge the movable contacts into engagement with the contact pads on the card when the carriage slides in the direction of card insertion.

A card reader in accordance with the invention does not have an externally opening drawer, but a simple slidable carriage which may be very slim and suitably is wholly enclosed within the chassis. Hence the card to be read is inserted directly into the card reader, e.g. through a slot in the external casing. By avoiding the drawer arrangement of the prior art the overall height of a card reader in accordance with the invention can be minimised.

The carriage itself carries (preferably integral) camming portions which act to urge the contacts into electrical connection with the contact pads on the card when the card is fully inserted. The camming portions have ramped or inclined camming surfaces which gradually urge the movable contacts into engagement with the contact pads on the card when the card is inserted into the card reader and which are also conducive to a slim design.

Hence a card reader in accordance with the present invention has the advantage that it can be made very slim indeed. For example, the height may be as little as 5mm which is very much less than the typical 17mm height of a conventional card reader.

The present card reader also has the movable contacts supported by the chassis, whereas in the DE-A- prior art documents discussed above they were mounted on the drawer. This reduces complexity since the contacts are in fixed relation to the main circuitry in the chassis thus avoiding the need for a special flexible, extensible or separable (plug and socket) connection arrangement. This is also a space saving factor which further contributes to the potential compactness of the overall design.

As with the prior art card readers of DE-A-3,343,727 and DE-A-3,343,757, the present card reader has the advantage that there is substantially no risk of damaging a card or the contacts when using the card reader since the contacts are spaced apart from the card whenever there is any sliding movement of the card relative to the contacts. Moreover, embossed cards can be used with the card reader without any problem. In this regard, in a preferred embodiment there is a slight clearance between the underside of the card and the upper surface of the carriage and the camming configuration of the pressing means present thereon. Also, a card that is distorted or bent, but which can nevertheless be inserted into the card reader, can still be read.

Additionally it is noted that the design of the present card reader is electrically and mechanically relatively simple, which facilitates manufacture and accordingly reduces expense.

As mentioned above, the camming configuration of the pressing means comprises a ramped or inclined surface or surfaces which gradually urge the movable contacts into engagement with the contact pads on the card when the card is inserted into the card reader thereby moving the carriage. The movable contacts preferably comprise leaf springs confronting the ramped or inclined surfaces and which are thereby deformed sufficiently to enable electrical contact to be made when the carriage advances due to card insertion. Such leaf springs may be U-shaped or S-shaped and arranged so that a hooked portion of the U or S-shape faces the ramped or inclined surface. A contact may also be fixed to each leaf spring to abut with the corresponding pad on the card.

Preferably, the card reader comprises switching means (such as a microswitch) having an actuator arranged for engagement by the card on insertion into the card reader, the switching means being connected to circuitry which causes power to be supplied to the means for reading the card after it has been fully inserted. Since it is the card itself rather than the carriage which operates the switch, information can only be read when the card is fully inserted into its operative position at which the contact pads are correctly located and electrically connected to the leaf spring contacts. This makes the card reader more tamper-proof since it reduces the possibility of the circuitry being activated by inserting a probe into the card reader slot and pushing a carriage which would otherwise operate a similar switch.

An embodiment of the invention will now be described, by way of example, with reference to the accompanying drawings, in which:-

Figure 1 is a perspective and exploded view of a card reader according to the invention.

Figures 2 and 3 are enlarged cross-sections of part of the card reader shown in Figure 1 and showing stages of operation as a card is inserted into the card reader.

Figure 4 is a plan view of the card reader shown in Figure 1.

Figure 5 is a sectional view taken on the line y-y of Figure 4, and

Figure 6 is a sectional view taken on the line X-X of Figure 4.

As the type of card intended to be used with the card reader of the invention is known to those skilled in the art, it will not be described in detail. Similarly, the circuitry, in conventional card readers, for reading the information from the card is also well-known to those skilled in the art and needs no further description. Moreover, the external detail of the card reader, such as its casing and the slot through which the card is inserted in order to operate the card reader, will not be described in detail since these features are generally known.

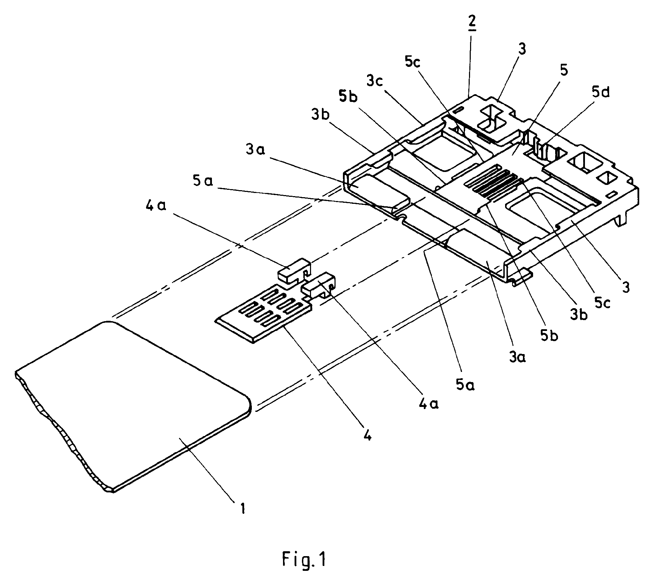

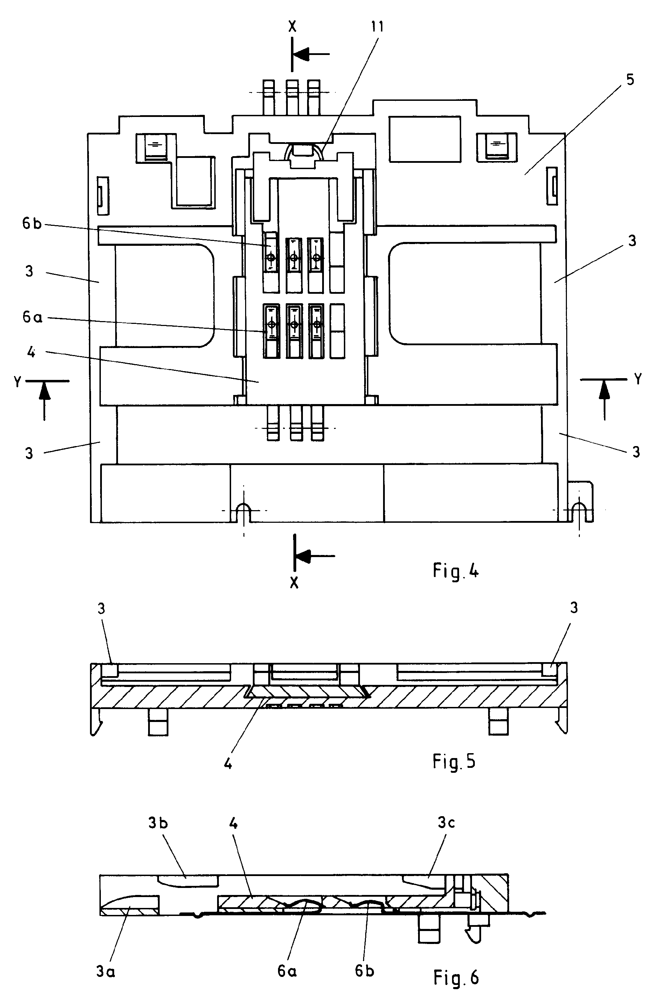

The card reader 2 comprises a chassis 3 enclosing a carriage 4 arranged for slidable movement in the chassis. A "smart card" 1 can be inserted (through a slot in a casing not shown) into the card reader. The card 1 is guided into its correct position by means of guides 3a, 3b, and 3c as shown in Figs. 1 and 6. The carriage 4 is provided with T-shaped stops 4a, 4b which abut the card 2 on insertion. The carriage 4 slides along a track partly defined by shoulders 5a, 5b and 5c, also as shown in Fig. 1. A microswitch (not shown) is positioned in the vicinity of a raised portion 5d, which is located at the end of track 5, so that it is actuated, by the card 1, after the card has been received in carriage 4 and has been inserted fully into the card reader. This microswitch operates circuitry (not shown) for supplying power to circuits (not shown) for reading the information stored on the card. Thus, the card is read only when it is in the operating position in which it actuates the switch for enabling the information to be read from the card.

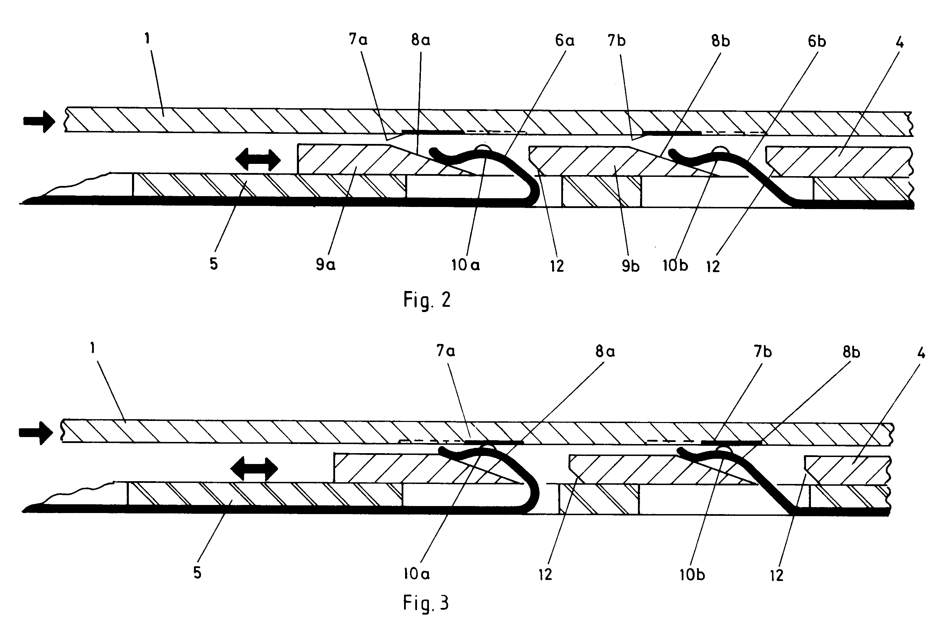

When the card 2 abuts the end stops 4a, 4b the leading edge of the card is at a small distance from the actuating button (not shown) of the microswitch. For example, in the preferred embodiment of the invention this distance is about 1.5mm. At this point, and as shown in Fig. 2, movable contacts, comprising leaf springs 6a and 6b, mounted on chassis 5, remain clear of contact pads 7a and 7b on the card 1. In this position, curled portions of each of the leaf springs 6a, 6b rest on the lower portions of respective ramped or inclined faces 8a and 8b of camming members 9a, 9b of the sliding carriage 4.

When the card 1 is inserted further into the card reader in the direction shown by the single headed arrow in Figures 2 and 3, the carriage 4 is urged towards the raised portion 5d so that the inclined faces 8a, 8b of the camming means 9a, 9b gradually elevates the curled portions of the leaf springs 6a, 6b until contacts 10a and 10b, which are conductively attached to leaf springs 6a, 6b, engage with the respective contact pads 7a, 7b on the card 1. At this point, the contact pads 7a, 7b are immediately above the contacts 10a, 10b as shown in Fig. 3.

In the preferred embodiment, six contacts (in two rows of three) engage with six similarly arranged contact pads on the card in the operating position as shown in Fig. 4. However, more or less contacts and contact pads may be provided, as required.

When the card 2 is removed from the card reader, a U-shaped leaf spring 11 returns carriage 4 to its starting position. Bevelled edges 12 on the carriage 4 also ensure that the leaf springs 6a, 6b are returned to a position at which contacts 10a and 10b are spaced apart from the underside of card 2 even if the springs do not return to this position by their own resilience.

Whilst a preferred embodiment of the invention has been described in detail, it will be apparent to a person skilled in the art that various modifications may be made without departing from the scope of the invention defined in the following claims.

## Claims

1. A card reader (2) for reading a card (1) comprising information storage means and contact pads (7a, 7b) connected thereto which enable stored information to be read from the card; the card reader including

a chassis (3) which supports a slidable carriage (4) adapted to receive the card,

a plurality of movable contacts (6a,6b) for engaging the contact pads (7a, 7b) on the card, and

means (9a, 9b) arranged to press against the movable contacts (6a, 6b) when the card (1) is inserted into the card reader (2) to urge the contacts (6a, 6b) into engagement with the contact pads (7a, 7b) on the card so that the information can be read from the card, characterised in that

the pressing means (9a, 9b) are present on the carriage (4) and comprise at least one chamfered camming surface (8a, 8b), and

the movable contacts (6a, 6b) are supported by the chassis (3) and have a respective portion confronting the camming surface(s) (8a, 8b) whereby the camming surface(s) urge the movable contacts into engagement with the contact pads (7a, 7b) on the card (1) when the carriage (4) slides in the direction of card insertion.

2. A card reader according to claim 1 wherein the pressing means (9a, 9b) are integral with the carriage (4).

3. A card reader according to claim 1 or claim 2, wherein the movable contacts comprise leaf springs (7a, 7b).

4. A card reader according to claim 3, wherein one end of the leaf springs (7a, 7b) is cantilevered to the chassis (3) and the opposite end has a hooked portion which confronts the pressing means (9a, 9b).

5. A card reader according to any one of the preceding claims, wherein the carriage (4) comprises abutments (4a) arranged to engage the leading edge of the card (1) when the card is partially inserted into the card reader (2) whereby further insertion of the card causes the carriage to slide in the direction of card insertion.

6. A card reader according to any one of the preceding claims, wherein the carriage (4) is enclosed within the chassis (3) both in its starting position before a card is inserted and in its retracted position whereat the card is fully inserted in the card reader.

7. A card reader according to any one of the preceding claims, and further comprising spring means (11) which cooperates with the carriage (4) at least when the card is fully inserted into the card reader to return the carriage to its starting position when the card is withdrawn.

8. A card reader as claimed in claim 7, wherein the carriage (4) is provided with chamfered camming portions (12) arranged to urge the movable contacts (6a, 6b) away from the contact pads (7a, 7b) on the card when the carriage returns to its starting position as the card is withdrawn from the card reader.

9. A card reader according to any one of the preceding claims, further including switching means arranged to be actuated by the card, when fully inserted into the card reader, whereby said switching means causes circuitry to be operated for reading the information on the card.

## Patentansprüche

1. Ein Kartenleser (2) zum Lesen einer Karte (1), welche Informationsspeichermittel und damit verbundene Kontaktkissen (7a, 7b), welche es ermöglichen, gespeicherte Infomation von der Karte zu lesen, umfallt; wobei der Kartenleser enthält:

ein Chassis (3), welches einen verschiebbaren Schlitten (4), welcher dazu vorgesehen ist, die Karte aufzunehmen, trägt,

eine Vielzahl von bewegbaren Kontakten (6a, 6b) zum Berühren der Kontaktkissen (7a, 7b) auf der Karte, und

einer Einrichtung (9a, 9b), die dazu vorgesehen ist, gegen die bewegbaren Kontakte (6a, 6b) zu pressen, wenn die Karte (l) in den Kartenleser (2) eingeführt wird, um die Kontakte (6a, 6b) in Berührung mit den Kontaktkissen (7a, 7b) auf der Karte zu drücken, so daß die Information von der Karte gelesen werden kann, dadurch gekennzeichnet, daß die Preßeinrichtung (9a, 9b) auf dem Schlitten (4) vorgesehen ist und wenigstens eine abgeschrägte Nockenoberfläche (8a, 8b) umfallt, und

die bewegbaren Kontakte ( 6a, 6b) durch das Chassis ( 3 ) gehaltert sind und einen jeweiligen der Nockenoberfläche (den Nockenoberflächen) (8a, 8b) gegenüberliegenden Teil aufweisen, wobei die Nockenoberfläche(n) mit den Kontaktkissen (7a, 7b) auf der Karte (1) drücken, wenn der Schlitten (4) in der Richtung der Karteneinführung gleitet.

2. Ein Kartenleser nach Anspruch 1, wobei die Preßeinrichtung (9a, 9b) einstückig mit dem Schlitten (4) ausgebildet ist.

3. Ein Kartenleser nach Anspruch 1 oder 2, wobei die bewegbaren Kontakte Blattfedern (7a, 7b) umfassen.

4. Ein Kartenleser nach Anspruch 3, wobei ein Ende der Blattfedern (7a, 7b) freitragend vorstehend an dem Chassis (3) vorgesehen ist und das gegenüberliegende Ende einen Hakenteil aufweist, welcher der Preßeinrichtung (9a, 9b) gegenüberliegt.

5. Ein Kartenleser nach wenigstens einem der vorhergehenden Ansprüche, wobei der Schlitten (4) Anschläge (4a) umfaßt, welche dazu vorgesehen sind, den Vorderrand der Karte (1) zu berühren, wenn die Karte teilweise in den Kartenleser (2) eingeführt ist, wodurch weiteres Einführen der Karte den Schlitten veranlallt, in Richtung der Karteneinführung zu gleiten.

6. Ein Kartenleser nach wenigstens einem der vorhergehenden Ansprüche, wobei der Schlitten (4) innerhalb des Chassis (3) sowohl in seiner Startposition, bevor eine Karte eingeführt wird, als auch in seiner zurückgezogenen Position, in welcher die Karte voll in den Kartenleser eingeführt ist, eingeschlossen ist.

7. Ein Kartenleser nach wenigstens einem der vorhergehenden Ansprüche, welcher ferner Federeinrichtungen (11) umfaßt, welche mit dem Schlitten (4) wenigstens dann zusammenarbeiten, wenn die Karte voll in den Kartenleser eingeführt ist, um den Schlitten in seine Startposition zurückzubringen, wenn die Karte zurückgezogen wird.

8. Ein Kartenleser nach Anspruch 7, wobei der Schlitten (4) mit abgeschrägten Nockenabschnitten (12) versehen ist, welche dazu vorgesehen sind, die bewegbaren Kontakte (6a, 6b) weg von den Kontaktkissen (7a, 7b) auf der Karte zu drücken, wenn der Schlitten in seine Startposition, wenn die karte aus dem Leser herausgezogen wird, zurückgebracht wird.

9. Ein Kartenleser nach wenigstens einem der vorhergehenden Ansprüche, welcher ferner eine Schaltereinrichtung enthält, die dazu vorgesehen ist, durch eine Karte, wenn sie voll in den Kartenleser eingesetzt ist, betätigt zu werden, wodurch die Schaltereinrichtung bewirkt, daß ein Schaltkreis zum Lesen der Information auf der Karte in Betrieb gesetzt wird.

**Revendications**

1. Lecteur de carte (2) pour lire une carte (1) comprenant un moyen de mémorisation d'information et des plots de contact (7a, 7b) connectés à celle-ci qui permet aux informations mémorisées d'être lues depuis la carte ;
le lecteur de carte comprenant :

un châssis (3) qui supporte un chariot coulissable (4) prévu pour recevoir la carte ;

une multitude de contacts mobiles (6a, 6b) pour engager les plots de contact (7a, 7b) sur la carte ; et

des moyens (9a, 9b) disposés pour presser contre les contacts mobiles (6a, 6b) lorsque la carte (1) est introduite dans le lecteur de carte (2) pour pousser les contacts (6a, 6b) en engagement avec les plots de contact (7a, 7b) sur la carte de sort que les informations peuvent être lues depuis la carte, caractérisé en ce que

les moyens de pression (9a, 9b) sont présents sur le chariot (4) et comprennent au moins une surface de came chanfreinée (8a, 8b) ; et

les contacts mobiles (6a, 6b) sont supportés par le châssis (3) et présentent une partie respective faisant face à la surface ou aux surfaces de came (8a, 8b) si bien que la surface ou les surfaces de came poussent les contacts mobiles en engagement avec les plots de contact (7a, 7b) sur la carte (1) lorsque le chariot (4) coulisse dans le sens de l'introduction de la carte.

2. Lecteur de carte selon la revendication 1, dans lequel les moyens de pression (9a, 9b) sont solidaires du chariot (4).

3. Lecteur de carte selon la revendication 1 ou la revendication 2, dans lequel des contacts mobiles comprennent des ressorts à lame (7a, 7b).

4. Lecteur de carte selon la revendication 3, dans lequel une extrémité des ressorts à lame (7a, 7b) est en porte-à-faux par rapport au châssis (3) et l'extrémité opposée comporte une partie en crochet qui fait face aux moyens de pression (9a, 9b).

5. Lecteur de carte selon l'une quelconque des revendications précédentes, dans lequel le chariot (4) comprend des butées (4a) disposées pour engager le bord avant de la carte (1) lorsque la carte est partiellement inroduite dans le lecteur de carte (2) si bien qu'une autre introduction de la carte amène le chariot à coulisser dans le sens de l'introduction de la carte.

6. Lecteur de carte selon l'une quelconque des revendications précédentes, dans lequel le chariot (4) est enfermé à l'intérieur du châssis (3) à la fois dans sa position initiale avant qu'une carte ne soit introduite et dans sa position rétractée où la carte est totalement introduite dans le lecteur de carte.

7. Lecteur de carte selon l'une quelconque des revendications précédentes et comprenant de plus un moyen de ressort (11) qui coopère avec le chariot (4) au moins lorsque la carte est totalement introduite dans le lecteur de carte afin de ramener le chariot à sa position de départ lorsque la carte est extraite.

8. Lecteur de carte selon la revendication 7, dans lequel le chariot (4) est prévu avec des parties de came chanfreinées (12) disposées pour pousser les contacts mobiles (6a, 6b) loin des plots de contact (7a, 7b) sur la carte lorsque le chariot retourne à sa position de départ à mesure que la carte est extraite du lecteur de carte.

9. Lecteur de carte selon l'une quelconque des revendications précédentes, comportant de plus un moyen de commutation disposé pour être actionné par la carte, lorsque totalement introduite dans le lecteur de carte, si bien que le moyen de commutation amène les circuits à fonctionner pour lire les informations sur la carte.

Fig.1

Fig. 2

Fig. 3

EP 0 325 458 B1

Fig.4

Fig.5

Fig.6